# EUROPÄISCHE PATENTSCHRIFT

(11) **EP 4 301 631 B1**
(45) Veröffentlichungstag und Bekanntmachung des Hinweises auf die Patenterteilung: **01.04.2026**
(21) Anmeldenummer: 22709667.4
(22) Anmeldetag: 24.02.2022
(51) Int. Cl.: B60R 22/26, B60N 2/68, B60R 22/34

(54) **LASTTRAGENDER GURTAUFROLLER UND SITZSTRUKTUR**
LOAD CARRYING BELT RETRACTOR AND SEAT STRUCTURE
ENROULEUR DE CEINTURE DE TRANSPORT DE CHARGE ET STRUCTURE DU SIÈGE

(30) Priorität: 02.03.2021 DE 102021105010
(43) Veröffentlichungstag der Anmeldung: 10.01.2024
(73) Patentinhaber: Autoliv Development AB, 447 83 Vårgårda (SE)
(72) Erfinder: SÖHNCHEN, Arndt, 22765 Hamburg (DE); JABUSCH, Ronald, 25336 Elmshorn (DE); LANGHOFF, Hans-Jörg, 25474 Bönningstedt (DE); GLAESSER, Antto-Christian, 25474 Hasloh (DE); CIRSTEA, Alexandru, 25335 Elmshorn (DE); EHLERS, Jens, 25358 Horst (DE)
(74) Vertreter: Müller Verweyen
(86) Internationale Anmeldenummer: PCT/EP2022/054600
(87) Internationale Veröffentlichungsnummer: WO 2022/184532

(56) Entgegenhaltungen:
- WO-A1-2021/023538
- DE-A1- 102018 213 279

## Beschreibung

Die vorliegende Erfindung betrifft einen lasttragenden Gurtaufroller für eine Sitzstruktur eines Fahrzeugsitzes mit den Merkmalen des Oberbegriffs von Anspruch 1 sowie eine korrespondierende Sitzstruktur mit den Merkmalen des Oberbegriffs von Anspruch 9.

Fahrzeugsitze mit integrierten Sicherheitsgurteinrichtungen sind z.B. in der Verwendung als Vordersitze in Cabriolets bekannt, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden müssen. Die Gurtaufroller selbst sind in ihrem Grundaufbau identisch mit Standardgurtaufrollern und werden nur mit verschiedenen speziell für den Einbau in die Rückenlehnen vorgesehenen Zusatzbaugruppen, wie z.B. einem sich selbst ausrichtenden Trägheitssensor versehen.

Ein Fahrzeugsitz weist in seinem Grundaufbau eine Sitzstruktur aus mehreren lasttragenden Strukturteilen auf, welche zur Befestigung des Fahrzeugsitzes an der Fahrzeugstruktur dienen. Die Sitzstruktur ist zur Verbesserung des Sitzkomforts mit Federn und einer Polsterung versehen und dient außerdem zur Befestigung weiterer Bauteile wie z.B. verschiedene Sitzverstellmechanismen, einschließlich der zugehörigen Elektromotoren und weiterer Bauteile wie Heizeinrichtungen, Sensoren, Displays, Kopfstützen und dergleichen.

In modernen Fahrzeugen mit autonomen Fahrsystemen wird zunehmend eine vergrößerte Verstellbarkeit der Fahrzeugsitze in verschiedene Ausrichtungen und Stellungen gefordert, damit der Fahrzeuginsasse die durch das autonome Fahren gewonnenen Freiheiten z.B. zu einer vertieften Kommunikation mit den weiteren Insassen, zu verlängerten und intensiveren Ruhephasen oder auch zur Arbeit nutzen und den Fahrzeugsitz dazu entsprechend ausrichten kann. Dies hat zur Folge, dass die Sicherheitsgurteinrichtung und insbesondere der Gurtaufroller nicht mehr wie bisher an der Fahrzeugstruktur, sondern stattdessen am Fahrzeugsitz befestigt werden muss, wie dies z.B. auch schon bei den Vordersitzen in Cabriolets der Fall war.

Ein lasttragendes Strukturteil für einen Fahrzeugsitz, in dem ein Gurtaufroller angeordnet ist, ist beispielsweise aus der DE 10 2018 213 279 A1 bekannt. Die WO 2021/023538 A1 offenbart einen lasttragenden Gurtaufroller gemäß dem Oberbegriff des Anspruchs 1.

Vor diesem Hintergrund liegt der Erfindung die Aufgabe zugrunde, einen verbesserten, formstabilen und crashfesten Gurtaufroller für eine Sitzstruktur anzugeben.

Zur Lösung der Aufgabe wird ein lasttragender Gurtaufroller mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird nach Anspruch 1 ein lasttragender Gurtaufroller für eine Sitzstruktur eines Fahrzeugsitzes vorgeschlagen, wobei der Gurtaufroller zwei Gehäusehälften aufweist, zwischen denen Funktionsmodule des Gurtaufrollers angeordnet sind, wobei ein Funktionsmodul eine Gurtspule mit einer Wickelachse ist. Die zwei Gehäusehälften bilden zwei parallel zueinander und senkrecht zur Wickelachse ausgerichtete Aufnahmen im Gurtaufroller, wobei in die Aufnahmen zwei Sitzholme einsteckbar sind. Die zwei Gehäusehälften stehen zumindest an zwei Kontaktlinien oberhalb und unterhalb der Funktionsmodule in Bezug zu einer Einsteckrichtung der Aufnahmen in Kontakt, wobei die untere Kontaktlinie sich beidseitig entlang der Wickelachse unter Bildung von jeweils einem offenen Zwischenraum zu den Aufnahmen auftrennt.

Lasttragend bedeutet in diesem Zusammenhang, dass der Gurtaufroller neben der Einleitung von Kräften aus dem Sicherheitsgurt in eine Sitzstruktur auch Lasten der Sitzstruktur selbst aufnehmen und weiterleiten kann. Der Gurtaufroller ist daher geeignet als lasttragendes Strukturteil einer übergeordneten Sitzstruktur zu dienen.

Ein Funktionsmodul eines Gurtaufrollers ist insbesondere eine Gurtspule mit einem darauf zu einem Gurtwickel aufwickelbaren Sicherheitsgurt. Ein weiteres Funktionsmodul ist insbesondere eine Blockiereinrichtung.

Ein Funktionsmodul kann weiterhin ein reversibler Gurtstraffer, ein irreversibler Gurtstraffer, eine Kraftbegrenzungseinrichtung, eine Sensoreinrichtung oder auch eine Steuereinrichtung sein. Weiterhin kann ein Funktionsmodul ein Elektromotor sein, welcher für verschiedene Funktionen in dem Gurtaufroller vorgesehen sein kann.

Die zwischen den beiden Gehäusehälften angeordneten Funktionsmodule des Gurtaufrollers sind vorzugsweise axial oder koaxial und in Reihe zu der Gurtspule angeordnet. Hieraus ergibt sich eine platzsparende Bauweise in einem schmalen länglichen Bauraum, wodurch der Gurtaufroller einfach in der Rücklehne eine Fahrzeugsitzes angeordnet werden kann. In Bezug zur Erstreckung der Drehachse der Gurtspule sind die Funktionsmodule hinter oder vor der Gurtspule angeordnet. Die weiteren Funktionsmodule neben der Gurtspule können in Bezug zu der Drehachse der Gurtspule in Reihe also hintereinander angeordnet werden, dass sie den Gurtwickel zur Außenseite gegebenenfalls nur geringfügig überragen und die längliche Ausbildung des Gurtaufrollers fortgesetzt und weiter verlängert wird.

Die beiden Gehäusehälften des Gurtaufrollers erstrecken sich vorzugsweise über die gesamte Breite des Gurtaufrollers. Die Gehäusehälften können jeweils zwei Sitzholme, die die seitliche Sitzstruktur einer Rücklehne eines Fahrzeugsitzes auf beiden Seiten bilden, in den Aufnahmen zumindest teilweise umschließen.

Die vorgeschlagene beidseitige Auftrennung unter Bildung jeweils eines Zwischenraums ermöglicht eine optimierte und gleichmäßige Krafteinleitung bzw. Kraftführung. Die zwei Gehäusehälften sind dazu eingerichtet die Sitzholme im Bereich der Aufnahmen zu umschließen. Die Gehäusehälften sind mittig zusammengeführt bis sie an der unteren Kontaktlinie in Kontakt treten. Es kann daher eine hohe Steifigkeit des lasttragenden Gurtaufrollers bei geringem Gewicht erreicht werden.

Die offenen Zwischenräume sind zudem vorteilhaft, um überschüssigen Druck eines pyrotechnischen Gurtstraffers bei einer Auslösung, bspw. bei einer möglichen Blockade des Strafferrades, nach unten in ein Sitzpolster und von einem Insassen auf dem Sitz sowie auch von einem Insassen in einer möglichen Sitzreihe dahinter abzuleiten. Ferner wird in einfacher Weise eine Zugangsöffnung im Gehäuse zu den darin angeordneten Funktionsmodulen des Gurtaufrollers geschaffen.

Gemäß der Erfindung grenzen die Zwischenräume jeweils an die Aufnahme an und gehen in die Aufnahme über. Hierdurch kann neben einer Gewichtseinsparung durch einen vorteilhaften Kraftverlauf auch eine günstige Herstellbarkeit erreicht werden. Gemäß einer Weiterentwicklung wird vorgeschlagen, dass die zwei Gehäusehälften an der unteren Kontaktlinie mit ihren Gehäuseinnenseiten in Kontakt stehen. Dementsprechend kann die untere Kontaktlinie parallel zur Wickelachse eine breite Kontaktfläche bilden, d.h. die Breite der Kontaktlinie entspricht zumindest abschnittsweise einem Vielfachen der Materialstärke der zwei Gehäusehälften.

Es wird ferner vorgeschlagen, dass durch einen der offenen Zwischenräume ein freies Ende eines pyrotechnischen Strafferrohrs geführt ist. Hierdurch kann nach einer Montage des Gurtaufrollers an einer Sitzstruktur ein einfacher Anschluss des Zündsteckers erfolgen. Ferner kann hierdurch eine längere Ausführung des pyrotechnischen Strafferrohrs gegenüber einer Führung parallel zur Wickelachse erreicht werden, da diese durch die Sitzbreite systematisch begrenzt ist. Außerdem kann dadurch ein möglicher Überdruck aus dem Strafferrohr bei einer Blockade des Straffers und einem darin vorgesehenen Überdruckventil aus dem Gurtaufroller heraus in den Fahrzeugsitz abgeleitet werden.

Gemäß einer Weiterentwicklung wird vorgeschlagen, dass durch einen der offenen Zwischenräume ein Kabel zur Ansteuerung mindestens einer der Funktionsmodule geführt ist. Das Kabel kann beispielsweise einen Stecker aufweisen, welcher beispielsweise im Bereich einer Rückenlehne angeschlossen sein kann.

In einer vorteilhaften Ausführungsform wird die obere Kontaktlinie von einem Kopfstützenhalter übergriffen. Der Kopfstützenhalter ist vorzugsweise mit beiden Gehäusehälften verbunden und kann den Gurtaufroller mit den beiden Gehäusehälften und den Funktionsmodulen zusammenhalten und eine zusätzliche Anpresskraft der Gehäusehälften in den Kontaktlinien durch seine Befestigung erzeugen.

Gemäß einer Weiterentwicklung wird vorgeschlagen, dass der Kopfstützenhalter in ein Gehäuseteil mit mindestens einer Lasche eingreift. Durch den Eingriff kann eine Vormontage bzw. ein Fügevorgang mit einem Formschluss erreicht werden, der eine sehr leichte und kostengünstige Verbindung ermöglicht.

Es wird ferner vorgeschlagen, dass der Kopfstützenhalter mit einem der zwei Gehäusehälften verschraubt ist. Es ist beispielsweise vorteilhaft, wenn der Kopfstützenhalter nur mit einer Kopfstützenhälfte verschraubt ist und mit dem anderen Gehäuseteil über einen Formschluss verbunden ist. Die Verbindung der zwei Gehäusehälften kann daher schnell und einfach hergestellt werden.

Gemäß einer Weiterentwicklung wird vorgeschlagen, dass die beiden Gehäusehälften in ihrer Grundform symmetrisch sind. Die beiden Gehäusehälften können daher in einer Blechfertigung in verschiedenen Herstellungsschritten gleich sein und sich ggf. in Ausstanzungen oder Sicken unterscheiden.

Die Gehäusehälften sind vorzugsweise aus einem Metallblech gefertigt, was eine kostengünstige Fertigung mit hoher Festigkeit ermöglicht.

Gemäß dem Grundgedanken der Erfindung wird nach Anspruch 9 eine Sitzstruktur mit zwei parallel zueinander ausgerichteten Sitzholmen vorgeschlagen, wobei auf die Sitzholme ein lasttragender Gurtaufroller nach einem der Ansprüche 1 bis 8 9 aufgesteckt und an den Sitzholmen befestigt ist.

Eine entsprechende Sitzstruktur kann besonders leicht und formstabil mit der Integration des Gurtaufrollers ausgeführt werden.

In einer bevorzugten Ausführungsform sind in den Gurtaufroller zwei parallel und beabstandet zueinander verlaufende Sitzholme entlang einer Einsteckachse einsteckbar und mit dem Gurtaufroller verschraubbar. Die beiden Gehäuseteile des Gurtaufrollers erstrecken sich vorzugsweise über die gesamte Breite des Gurtaufrollers. Die Gehäuseteile können jeweils zwei Sitzholme, die die seitliche Sitzstruktur einer Rücklehne eines Fahrzeugsitzes auf beiden Seiten bilden, zumindest teilweise umschließen. Die zwei Gehäuseteile bilden vorzugweise zwei Aufnahmen im Gurtaufroller, in die zwei Sitzholme einsteckbar sind.

Die Erfindung wird im Folgenden anhand bevorzugter Ausführungsformen unter Bezugnahme auf die beigefügten Figuren erläutert. Dabei zeigt
- Fig. 1: einen lasttragenden Gurtaufroller einer Sitzstruktur in einer Frontansicht;
- Fig. 2: einen lasttragenden Gurtaufroller mit Sitzholmen in einer Ansicht von unten;
- Fig. 3: einen lasttragenden Gurtaufroller mit Sitzholmen einer Sitzstruktur in einer Rückansicht; und
- Fig. 4: einen lasttragenden Gurtaufroller mit Sitzholmen in einer weiteren Ansicht von unten.

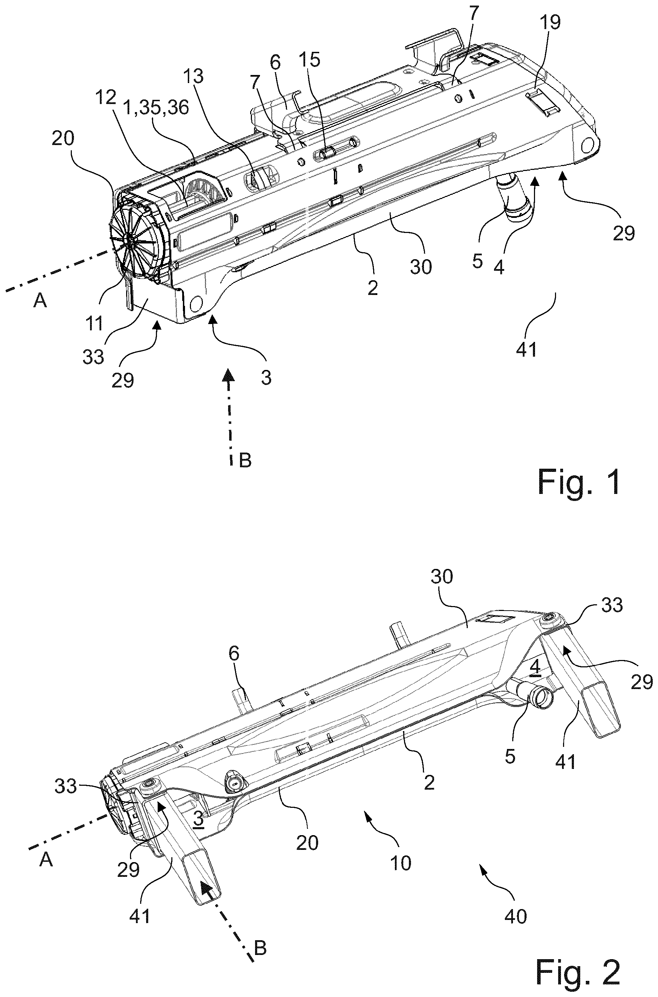

In Figur 1 ist ein Ausführungsbeispiel eines lasttragenden Gurtaufrollers 10 in einer Frontansicht gezeigt. Der Gurtaufroller 10 weist mehrere Funktionsmodule 11, 12, 13, 15, 19 auf, welche hintereinander in einer gestapelten Anordnung aufgebaut sind. Hierdurch ergibt sich ein länglicher Bauraum, welcher in den oberen Teil einer Rückenlehne eines Fahrzeugsitzes integriert sein kann. Die Funktionsmodule 11, 12, 13, 15, 19 sind beispielsweise eine Gurtspule 12 für einen Sicherheitsgurt (nicht dargestellt) an dem eine Triebfeder 11 vorgesehen ist. Die Gurtspule 12 weist eine Wickelachse A auf, um die ein Sicherheitsgurt zu einem Gurtwickel aufwickelbar ist. Weiterhin ist ein Strafferantriebsrad 13 vorgesehen, mit dem eine pyrotechnische Gurtstraffung erreicht werden kann. Eine Kraftbegrenzungsvorrichtung (LLA) ist neben einer zugehörigen Schalteinrichtung 15 angeordnet. Ein Profilkopf mit Blockierklinke ist axial neben einem Rahmen mit Verzahnung zum Blockieren der Blockierklinke vorgesehen. Weiter kann axial beispielsweise ein Getriebe, insbesondere ein Planetengetriebe vorgesehen sein, an dem ein Motor 19, insbesondere ein Elektromotor, vorgesehen ist. Die Funktionsmodule 11, 12, 13, 15, 19 sind in der Darstellung weitestgehend durch das Gehäuse verdeckt.

Das Gehäuse des Gurtaufrollers 10 besteht grundsätzlich aus zwei Gehäusehälften 20, 30. Der Gurtaufroller 10 ist in der Figur 1 von oben entsprechend der Einsteckrichtung B, welche senkrecht zur Wickelachse A steht, auf die Sitzholme 41 aufsteckbar bzw. die Sitzholme der Sitzstruktur 40 können von unten in die Aufnahmen 29 des Gurtaufrollers 10 eingesteckt werden.

Die Gehäusehälften 20, 30 sind an einer oberen Kontaktlinie 1 mittels Steckverbindungen von Zungen 35 und korrespondierenden Schlitzen 36 an der anderen Gehäusehälfte 20, 30 durch Formschluss verbunden.

Figur 2 zeigt den Gurtaufroller 10 in einer Ansicht von unten, in der die untere Kontaktlinie 2 zwischen den beiden Gehäusehälften 20, 30 zu erkennen ist. Die untere Kontaktlinie 2 öffnet sich beidseitig entlang der Wickelachse A zu den Enden des Gurtaufrollers 10 hin. Es ergeben sich die beiden offenen Zwischenräume 3, 4, welche sich ausgehend von der unteren Kontaktlinie 2 zunehmend erweitern bis die offenen Zwischenräume 3, 4 in die Aufnahmen 29 übergehen. In die Aufnahmen 29 sind in der Darstellung der Figur 2 Sitzholme 41 in der Einsteckrichtung B eingesteckt. Der Gurtaufroller 10 ist mit entsprechenden Durchgangsbohrungen mit den Sitzholmen 41 verschraubt. Der Gurtaufroller 10 kann dementsprechend ein lasttragendes Element der Sitzstruktur 40 bilden. Ferner sind C-förmige Spangen 33 zwischen den Gehäuseinnenseiten der beiden Gehäusehälften 20, 30 und einem Sitzholm 41 angeordnet und gemeinsam mit diesen verschraubt. Die Sitzholme 41 füllen die Aufnahmen 29 in diesem Fall aus, die offenen Zwischenräume 3, 4 bleiben jedoch auch bei jeweils einem eingesteckten Sitzholm 41 erhalten. Der Übergang von der unteren Kontaktlinie 2 zu den Aufnahmen 29 kann durch die offenen Zwischenräume 3, 4 kontinuierlich erfolgen, was mechanische Spannungsspitzen reduziert und die Festigkeit verbessert.

An der unteren Kontaktlinie 2 stehen die zwei Gehäusehälften 20, 30 jeweils mit ihren Gehäuseinnenseiten bzw. mit den entsprechenden Abschnitten der Gehäuseinnenseite in Kontakt und bilden dadurch einen formstabilen Verbund. Die Gehäusehälften 20, 30 ergänzen sich im Bereich der Kontaktlinie 2 zu einem umfänglich geschlossenen Profil, an dem sich die Funktionsmodule 11, 12, 13, 15, 19 vollumfänglich abstützen können.

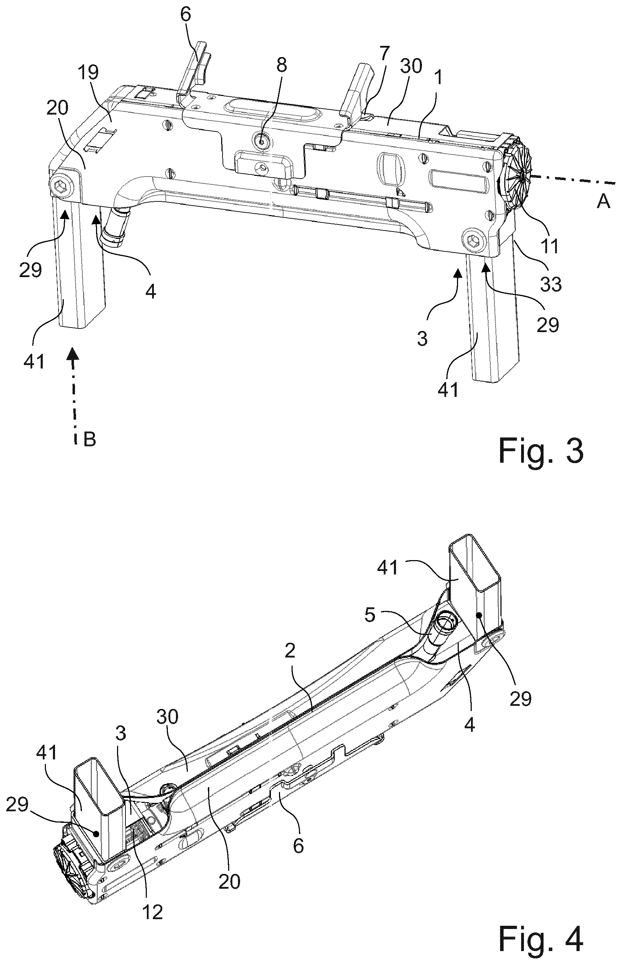

In Figur 3 ist das Ausführungsbeispiel des Gurtaufrollers 10 von der Rückseite dargestellt, welche in einem Einbauzustand in einem Fahrzeugsitz der Ansicht auf die Rückseite der Rückenlehne entspricht. Ein Kopfstützenhalter 6 verbindet in diesem vorteilhaften Ausführungsbeispiel die beiden Gehäusehälften 20, 30 und überspannt die obere Kontaktlinie 1. Der Kopfstützenhalter 6 weist zwei Laschen 7 auf, die in die Gehäusehälfte 30 eingesteckt sind. Der weitere Teil des Kopfstützenhalters 6 umgreift, wie in Figur 3 zu erkennen, die Rückseite der rückwärtigen Gehäusehälfte 20 und ist mittels einer Schraube 8 mit dieser Gehäusehälfte 20 verschraubt.

In Figur 4 ist der Gurtaufroller 10 von unten in einer weiteren Ansicht dargestellt. Es ist dabei gut zu erkennen, dass das Strafferrohr 5 eines pyrotechnischen Gurtstraffers mit seinem freien Ende durch den offenen Zwischenraum 3 verläuft, welcher sich zwischen der unteren Kontaktlinie 2 und der Aufnahme 29 befindet. Dementsprechend kann das Strafferrohr 5 länger ausgeführt sein, als dies mit einer gerade Ausrichtung möglich ist. Ferner kann ein Zündstecker in einfacher Weise an dem freien Ende des Strafferrohrs 5 angeschlossen werden.

Neben oder alternativ statt dem Kopfstützenhalter 6 können auch weitere Funktionsanbindungen durch weitere Halterungen vorgesehen sein. So können z.B. bei einem Gurtaufroller 10, der in den Vordersitzen angeordnet ist, zusätzlich Halterungen für Rear-Seat-Entertainment oder Bildschirmaufhängungen; Airbag-Modul-Halterungen und Halterungen für weitere Airbagbestandteile wie Gasgeneratoren, Fangbandstraffer, etc. vorgesehen sein. Bei Gurtaufrollern 10, die zur Anordnung in Rücksitzen vorgesehen sind, kann z.B. zusätzlich ein Ansatz zur Lehnenverriegelung vorgesehen sein.

## Patentansprüche

1. Lasttragender Gurtaufroller (10) für eine Sitzstruktur (40) eines Fahrzeugsitzes, wobei
- der Gurtaufroller (10) zwei Gehäusehälften (20, 30) aufweist, zwischen denen Funktionsmodule (11,12,13,15,19) des Gurtaufrollers (10) angeordnet sind, wobei
- ein Funktionsmodul (12) eine Gurtspule (12) mit einer Wickelachse (A) ist,
- die zwei Gehäusehälften (20,30) zwei parallel zueinander und senkrecht zur Wickelachse (A) ausgerichtete Aufnahmen (29) im Gurtaufroller (10) bilden, wobei in die Aufnahmen (29) zwei Sitzholme (41) einsteckbar sind,
- wobei die zwei Gehäusehälften (20,30) zumindest an zwei Kontaktlinien (1,2) oberhalb und unterhalb der Funktionsmodule (11,12,13,15,19) in Bezug einer Einsteckrichtung (B) der Aufnahmen (29) in Kontakt stehen, wobei
- die untere Kontaktlinie (2) sich beidseitig entlang der Wickelachse (A) unter Bildung von jeweils einem offenen Zwischenraum (3,4) zu den Aufnahmen (29) auftrennt, **dadurch gekennzeichnet, dass** die Zwischenräume (3,4) jeweils an die Aufnahme (29) angrenzen und von der unteren Kontaktlinie (2) zunehmend erweitern bis die offenen Zwischenräume (3, 4) in die Aufnahme (29) übergehen.

2. Gurtaufroller (10) nach Anspruch 1, **dadurch gekennzeichnet, dass** die zwei Gehäusehälften (20, 30) an der unteren Kontaktlinie (2) mit ihren Gehäuseinnenseiten in Kontakt stehen.

3. Gurtaufroller (10) nach einem der Ansprüche 1 bis 2, **dadurch gekennzeichnet, dass** durch einen der offenen Zwischenräume (3,4) ein freies Ende eines pyrotechnischen Strafferrohrs (5) geführt ist.

4. Gurtaufroller (10) nach einem der Ansprüche 1 bis 3, **dadurch gekennzeichnet, dass** durch einen der offenen Zwischenräume (3,4) ein Kabel zur Ansteuerung mindestens einer der Funktionsmodule (11,12,13,15,19) geführt ist.

5. Gurtaufroller (10) nach einem der Ansprüche 1 bis 4, **dadurch gekennzeichnet, dass** die obere Kontaktlinie (1) von einem Kopfstützenhalter (6) übergriffen wird.

6. Gurtaufroller (10) nach Anspruch 5, **dadurch gekennzeichnet, dass** der Kopfstützenhalter (6) in eine Gehäusehälfte (30) mit mindestens einer Lasche (7) eingreift.

7. Gurtaufroller (10) nach Anspruch 5 oder 6, **dadurch gekennzeichnet, dass** der Kopfstützenhalter (6) mit einem der zwei Gehäusehälften (20,30) verschraubt ist.

8. Gurtaufroller (10) nach einem der Ansprüche 1 bis 7, **dadurch gekennzeichnet, dass** die beiden Gehäusehälften (20,30) in ihrer Grundform symmetrisch sind.

9. Sitzstruktur (40) mit zwei parallel zueinander ausgerichteten Sitzholmen (41), **dadurch gekennzeichnet, dass** auf die Sitzholme (41) ein lasttragender Gurtaufroller (10) nach einem der Ansprüche 1 bis 8 aufgesteckt und an den Sitzholmen (41) befestigt ist.

## Claims

1. A load carrying belt retractor (10) for a seat structure (40) of a vehicle seat,
- the belt retractor (10) having two housing halves (20, 30) between which functional modules (11, 12, 13, 15, 19) of the belt retractor (10) are arranged,
- one functional module (12) being a belt reel (12) having a winding axis (A),
- the two housing halves (20, 30) forming two mutually parallel receptacles (29) in the belt retractor (10), which are oriented perpendicularly to the winding axis (A), it being possible to insert two seat bars (41) into the receptacles (29),
- the two housing halves (20, 30) being in contact at least on two contact lines (1, 2) above and below the functional modules (11, 12, 13, 15, 19) with respect to an insertion direction (B) of the receptacles (29),
- the lower contact line (2) splitting open on both sides along the winding axis (A) such that an intermediate space (3, 4) open toward the receptacles (29) is formed in each case, **characterized in that**
the intermediate spaces (3, 4) each border the receptacle (29) and widen increasingly from the lower contact line (2) until the open intermediate spaces (3, 4) merge into the receptacle (29).

2. The belt retractor (10) according to claim 1, **characterized in that** the two housing halves (20, 30) are in contact with their housing inner surfaces at the lower contact line (2).

3. The belt retractor (10) according to either of claims 1 to 2, **characterized in that** a free end of a pyrotechnic pretensioner tube (5) is guided through one of the open intermediate spaces (3, 4).

4. The belt retractor (10) according to any of claims 1 to 3, **characterized in that** a cable for controlling at least one of the functional modules (11, 12, 13, 15, 19) is guided through one of the open intermediate spaces (3, 4).

5. The belt retractor (10) according to any of claims 1 to 4, **characterized in that** the upper contact line (1) is overlapped by a headrest holder (6).

6. The belt retractor (10) according to claim 5, **characterized in that** the headrest holder (6) engages in a housing half (30) with at least one lug (7).

7. The belt retractor (10) according to claim 5 or claim 6, **characterized in that** the headrest holder (6) is screwed to one of the two housing halves (20, 30).

8. The belt retractor (10) according to any of claims 1 to 7, **characterized in that** the two housing halves (20, 30) are symmetrical in their basic shape.

9. A seat structure (40) having two seat bars (41) which are oriented in parallel with one another, **characterized in that** the load carrying belt retractor (10) according to any of claims 1 to 8 is attached to the seat bars (41) and is fastened to the seat bars (41).

## Revendications

1. Enrouleur de ceinture (10) porteur de charge pour une structure de siège (40) d'un siège de véhicule, dans lequel
- l'enrouleur de ceinture (10) présente deux moitiés formant boîtier (20, 30) entre lesquelles sont disposés des modules de fonction (11, 12, 13, 15, 19) de l'enrouleur de ceinture (10), dans lequel
- un module de fonction (12) est une bobine de ceinture (12) comportant un axe d'enroulement (A),
- les deux moitiés formant boîtier (20, 30) forment deux logements (29) orientés parallèlement l'un à l'autre et perpendiculairement à l'axe d'enroulement (A) dans l'enrouleur de ceinture (10), dans lequel deux barres de siège (41) peuvent être insérées dans les logements (29),
- dans lequel les deux moitiés formant boîtier (20, 30) sont en contact au moins au niveau de deux lignes de contact (1, 2) au-dessus et au-dessous des modules de fonction (11, 12, 13, 15, 19) par rapport à une direction d'insertion (B) des logements (29), dans lequel
- la ligne de contact inférieure (2) se sépare des deux côtés le long de l'axe d'enroulement (A) en formant respectivement un espace intermédiaire ouvert (3, 4) vers les logements (29), **caractérisé en ce que**
les espaces intermédiaires (3, 4) sont respectivement adjacents au logement (29) et s'élargissent progressivement depuis la ligne de contact inférieure (2) jusqu'à ce que les espaces intermédiaires ouverts (3, 4) se prolongent dans le logement (29).

2. Enrouleur de ceinture (10) selon la revendication 1,
**caractérisé en ce que** les deux moitiés formant boîtier (20, 30) sont en contact par leurs côtés intérieurs de boîtier au niveau de la ligne de contact inférieure (2).

3. Enrouleur de ceinture (10) selon l'une des revendications 1 à 2, **caractérisé en ce qu'**une extrémité libre d'un tube tendeur pyrotechnique (5) est guidée à travers l'un des espaces intermédiaires ouverts (3, 4).

4. Enrouleur de ceinture (10) selon l'une des revendications 1 à 3, **caractérisé en ce qu'**un câble pour la commande d'au moins l'un des modules de fonction (11, 12, 13, 15, 19) est guidé à travers l'un des espaces intermédiaires ouverts (3, 4).

5. Enrouleur de ceinture (10) selon l'une des revendications 1 à 4, **caractérisé en ce que** la ligne de contact supérieure (1) est recouverte par un élément de maintien pour appuie-tête (6).

6. Enrouleur de ceinture (10) selon la revendication 5,
**caractérisé en ce que** l'élément de maintien pour appuie-tête (6) vient en prise dans une moitié formant boîtier (30) avec au moins une patte (7).

7. Enrouleur de ceinture (10) selon la revendication 5 ou 6,
**caractérisé en ce que** l'élément de maintien pour appuie-tête (6) est vissé à l'une des deux moitiés formant boîtier (20, 30).

8. Enrouleur de ceinture (10) selon l'une des revendications 1 à 7, **caractérisé en ce que** les deux moitiés formant boîtier (20, 30) sont symétriques dans leur forme de base.

9. Structure de siège (40) comportant deux barres de siège (41) orientées parallèlement l'une à l'autre, **caractérisée en ce qu'**un enrouleur de ceinture (10) porteur de charge selon l'une des revendications 1 à 8 est enfiché sur les barres de siège (41) et fixé aux barres de siège (41).
